# EUROPEAN PATENT APPLICATION

(11) **EP 2 963 885 A1**
(43) Date of publication of application: **06.01.2016**
(21) Application number: 14175590.0
(22) Date of filing: 03.07.2014
(51) Int. Cl.: H04L 29/06, H04L 29/08, G06F 17/30

(54) **A client-server-communication system running a client-side-script-program**

(71) Applicant: HOB GmbH & Co. KG, 90556 Cadolzburg (DE)
(72) Inventor: Martin, Stefan, 99610 Tunzenhausen (DE); Rettner, Alexander, 90763 Fürth (DE); Brandstätter, Klaus, 90574 Rosstal (DE)
(74) Representative: Rau, Schneck & Hübner Patentanwälte Rechtsanwälte PartGmbB

(57) **Abstract**

A client-server-communication system comprises
- a public network (1), especially the Internet,
- a server computer (2)
= running at least one server application which provides a graphical user interface,
= wherein the server application creates basic GUI data to be processed by a graphics processing unit (7) for controlling said graphical user interface, which basic GUI data at least include a set of geometric basic primitives, and

- a client computer (3)
= including a graphics processing unit (7),
= connectable to the server computer (2) via the public network (1), and
= running a browser program (5) which is HTML5 capable,
= in which browser program (5) a client-side-script-program (9) including a WebSocket protocol (10) is running, which receives and interprets the basic GUI data and from these basic GUI data renders drawing instructions as graphics content for being processed by the graphics processing unit (7) of the client computer (3).

## Description

### BACKGROUND OF THE INVENTION

### Field of the invention

The invention refers to client-server-communication system comprising a public network, especially the Internet, a server computer and a client computer. Typically such a system is realized by a remote desktop server scenario.

### Background Art

For a proper understanding of the present invention it is necessary to discuss such a remote desktop server scenario in the light of the transmission of any graphical information between the server computer and the client computer.

In fact an application, running on a computer, which provides a graphical user interface (GUI), uses a vector graphics application programming interface, for example frameworks like Windows GDI (Graphics Device Interface), Xlib (X11) or Quartz 2D (Mac OS X). Additionally the application can use 3D programming interfaces, like OpenGL or DirectX. Such interfaces will simply be called GDI subsequently in this document. Further on the data generated and handled under these GDI interfaces are named "basic GUI data" in the following. Basic GUI data can also represent commands to manipulate bitmaps which have been created before, or read from a device such as the disk drive.

The mentioned frameworks are based on a set of so called geometric graphics Primitives, for example commands to draw a line, to fill a rectangle, or to draw an ellipse. They are usually processed by the graphics card incorporated into a computer, also called GPU (Graphics Processing Unit).

These GPUs normally can execute these Primitives faster than the CPU of the computer could do.

Whenever a Primitive cannot be handled by the GPU directly, it is emulated by an intermediate software.

Mostly, the software which generates the GDI-commands and the graphics card are in the same computer and are directly coupled.

In remote desktop scenarios, however, the graphics Primitives are redirected and sent over a network via an appropriate protocol, like RDP (Microsoft), X11 (X-Windows), ICA (Citrix) or PCoIP (Teradici).This means, the software generating the GDI-commands runs on one computer, namely the server computer. The graphic card together with some driver is running in another computer, namely the client computer, which shows the resulting graphics/pixels. The client and the server are connected by a network, which may be the public internet.

Protocols which send GDI-commands, Primitives, OpenGL commands or DirectX commands over a network are X11 - X-Windows, ICA from Citrix, RDP from Microsoft or PCoIP / PC-over-IP from Teradici.

Now a typical scenario, where there is a server application providing the information, which needs to be displayed remotely, is browsing the Web. Web server computers are providing information, which is sent over a network, e.g. the public internet, to a Web browser running on a client computer, which browser displays the information.

Web browsers, from the beginning, used the half-duplex protocol HTTP (Hypertext Transfer Protocol), as defined in RFC 2616. But this usage of a half-duplex protocol does not provide the functionality needed by some Web applications.

As today, with HTLM5, Web browsers either understand HTTP or the WebSocket protocol which are both based on TCP, but not other protocols that use TCP or UDP as transport layer, like the before mentioned remote desktop protocols x11, ICA, RDP or PCoIP.

Normally the browser shows the content of a Web page or result of a JavaScript program to the user and the user can input some data, with the keyboard or the mouse. In this moment, the server (Web server) cannot update the Web page or send new data to the JavaScript program running in the browser, because of the half-duplex restriction of the HTTP.

To overcome this hurdle, some JavaScript programs, running in the browser, send a new query, independent of any user input, just to ask the Web server if it wants to update the content the user is watching. This is called polling. The result of this polling is a lot of communication overhead and latency as the user can see the new Web page only after the time-gap between two polling requests. This leads to a bad user experience.

The WebSocket protocol, introduced with HTML5, is defined in RFC 6455. This new protocol is full-duplex and so the client like a Web browser or the server, which may be a Web server or a gateway, can send data whenever it wants, not restricted to specific states.

For the WebSocket protocol, also compression is supported in the components that implement the WebSocket protocol at the client side, in particular related to the Web browsers, and at the server applications, like the Web server or a gateway.

This compression is dictionary based (Deflate, GZIP). Compression of the primitives, bitmaps or other GUI commands/elements may be done by the server application, depending on the specific remote desktop protocol, prior to this Websocket based compression. This may greatly improve the efficiency of the transport of the commands from the server to the client, needed to display the GUI screen.

Web browsers in general are able to download script programs - Client-Side-Script-Program - from the Web server and run these programs directly inside the Web browser, like JavaScript or VBScript (Visual Basic Script). The latter runs in the Microsoft Web browser "Internet Explorer".

Maybe in the future new programming languages will be developed where the resulting program can also run directly in the Web browser on the client computer.

### SUMMARY OF THE INVENTION

Now keeping aforesaid background information in mind a basic problem within client-server-communication systems, when talking about controlling graphical user interfaces which are to be handled by a server computer and appear within the browser program running on a client computer, is the restricted efficiency of transporting parts of the screen or the entire screen to be displayed in the browser program on the client computer in pixels or bitmaps which are directly drawn. This needs a high bandwidth and leads to a restricted user experience.

The invention according to the features of claim 1 provides for a client-server-communication system that uses a basic concept to an improved handling of basic GUI data between a server and client computer, which system comprises
- a public network, especially the Internet,
- a server computer
   = running at least one server application which provides a graphical user interface,
   = wherein the server application creates basic GUI data to be processed by a graphics processing unit for controlling said graphical user interface, which basic GUI data at least include a set of geometric basic primitives, and
- a client computer
   = including a graphics processing unit,
   = connectable to the server computer via the public network, and
   = running a browser program which is HTML5 capable, in which browser program a client-side-script-program including a WebSocket protocol is running, which receives and interprets the basic GUI data and from these basic GUI data renders drawing instructions as graphics content for being processed by the graphics processing unit of the client computer.

For most interesting server applications, when the screen content needs to be shown by another computer, which is connected over a network, transporting basic GUI-commands is much more efficient compared to transporting parts of the screen or the entire screen as pixels or bitmaps, which are directly drawn.

The present invention is using above cited script program technologies, like JavaScript or VBScript, but it does not depend on the programming language supported by the Web browser. The functionality of the invention's program can be implemented in any programming language supported by Web browsers, whether already existing or possibly existing in the future.

As an advantage of this invention, the application running on the server computer generates basic GUI-commands. These are sent by a WebSocket connection to the Web browser, and the inventions Client-Side-Script-Program, for example a JavaScript program, running in the browser, uses the application programming interfaces e.g. for Canvas 2D or WebGL to draw into the browsers display area - preferred embodiment of claim 2.

Such a server could be a Microsoft Windows Terminal Server using RDP, or a Unix system using the Xlib for drawing into remote clients display area directly.

According to another preferred embodiment defined in claim 3 the basic GUI data are at least one of Primitives, OpenGL/GDI and DirectX commands which if necessary are emulated by the client-side-script-program.

Preferably the I/O terminal data are handled by the client-side-script-program, especially this program handles the data transfer including the basic GUI data or I/O channel data over the WebSocket protocol in a compressed form, and in particular over a Special Remote Desktop Protocol - preferred embodiments of claims 4 and 5.

According to another preferred embodiment of the invention defined in claim 6 the client-side-script-program further on provides for one or more of following functionalities:
- handling bitmaps data, especially compressed bitmaps data,
- applying raster operations onto the basic GUI data, and
- obtaining drawing contexts and creating Canvas or WebGL elements and updating same.

In this context bitmaps, which are a collection of pixel data, may be sent from the Web server to the browser over WebSocket in compressed form.

The compressed bitmaps are then expanded by the invention's client-side-script-program. This decompression may be done in software only or with the help of hardware like a GPU (Graphics Processing Unit).

Concerning the raster operations mentioned above it is to be explained that the GUI data, like GDI-commands or Primitives may contain raster operations (ROP) codes. Such a ROP-code, for example, may be the operation XOR (bitwise exclusive OR). This XOR means, the resulting bits generated from the GDI-commands or Primitives are XOR calculated with the old content of the destination buffer. The destination buffer could contain the displayed screen data, but it could also contain an intermediate bitmap. The destination buffer is managed by the client-side-script-program, running in the Web browser.

Concerning the mentioned drawing contexts under the new standards for Web browsers explained above, namely HTML5 and WebSocket, it is possible within said script program running in the browser that graphical information is drawn directly into the display area and the browser, namely by using above mentioned Canvas 2D or WebGL elements.

WebGL, i.e. Web Graphics Library, which is intended for 3D applications, was derived from OpenGL (Open Graphics Library); which is a language with a set of APIs (application programming interface) or data stream that sends commands directly to the graphics card. The graphics card (GPU) then executes the WebGL or OpenGL commands hardware-accelerated. It is worth to mention in this context that Canvas 2D and WebGL cannot be mixed when drawing on the same screen/browser window.

For further background information the HTML Canvas Reference can be found at: http://www.w3schools.com/tags/ref_canvas.asp.

A further basic extension of the concept of the invention refers to the implementation of the server client connection which does not need to be a direct WebSocket connection. Rather, as is basically included in claim 7, the client-server-communication system may comprise a gateway program running on the server computer or on a separate computer. The data and drawing commands, and preferably at least basic GUI data, are then sent to an intermediate gateway - preferred embodiment of claim 8 - which in turn realizes the translation to the WebSocket protocol in order to forward the data and commands to the HTML5 Web browser. The server computer itself can then use different networking connections, like TCP or UDP, which are usual connection protocols at the time of the invention.

In the inventions Client-Side-Script-Program, running in the Web browser, the screen content is generated by using the GDI-commands which may also manipulate bitmaps. Further on the invention's client-side-script-program, running in the Web browser, also renders the drawing instructions.

Graphics data and drawing commands sent by a Remote Desktop Server are often encrypted and compressed. Such a data stream cannot be optimized regarding a minimum of needed network bandwidth and processing power. Therefore, this data stream is decrypted and decompressed by the gateway according to another preferred embodiment of the invention as of claim 9.

Preferably according to claim 10 by the gateway program the data stream between server and client is filtered and split into several "channels", like GDI commands, bitmaps, and other data streams, marked as "I/O Channels", which may contain audio data, printer data, etc. The data of these different channels can now be optimized according to the related characteristics. Regarding compression, there exist different algorithms, where it is now possible to apply that one to a certain channel, which is best suited for that kind of data in order to get the best result.

The preferred embodiment of claim 11 provides for the gateway program performing a Special Remote Desktop Protocol. This Special Remote

Desktop Protocol as it is further defined in claim in 12 serves to provide transport channels to send the described single data stream channels to the Web browser. At least it supports data transport for vector graphics and bitmaps. Optionally, it may additionally support other data channels, like I/O data.

On the client side there exist the related protocol layers HTTP/HTTPS (with encryption) and WebSocket (with compression), which are provided by the Web browser. In the client-side-script-program, running inside the HTML5 capable Web browser, the Special Remote Desktop Protocol layer receives the data streams and separates the different data channels, as these are basic GUI data, like GDI commands, bitmaps, and the other I/O channel data. If the received data are compressed, they may be decompressed. Graphics data are rendered out of the GDI commands, raster operations may be performed. The format, in which the graphics data are passed to the Canvas elements, depends on the properties supported by the Web browser APIs.

Another preferred functionality according to claim 13 of that Special Remote Desktop Protocol is providing a flow control related to that protocol layer. This flow control ensures that the Web browser does not suffer of too much data receive in a short time.

### BRIEF DESCRIPTION OF THE DRAWING

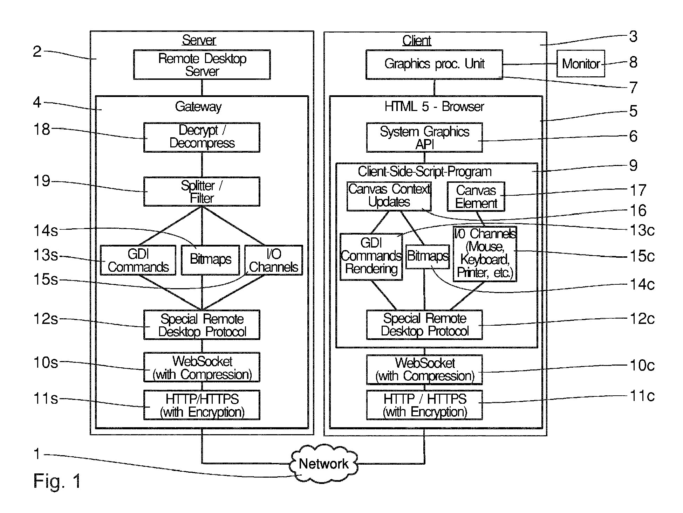

The invention will be described in more detail in the following explanation of a preferred embodiment referring to the accompanying drawing, in which
**Fig. 1** is a schematic overview of a client-server-communication system.

### DETAILED DESCRIPTION OF THE PREFERRED EMBODIMENT

The basic components of the client-server-communication system shown in Fig. 1 are a public network 1 like the Internet, which connects a server computer 2 and a client computer 3. The server 2, which is adapted to be a Remote Desktop Server, runs a gateway program 4, the functionality of which is to be explained in the following. The gateway program 4 can also be implemented on a separate computer.

The client computer 3 runs a browser program 5 which is HTML5 capable. The browser program 5 is called Web browser in the following. This Web browser 5 provides for the system graphics API 6 which controls the graphics processing unit 7 associated to the display unit 8 of the client computer 3.

Within the Web browser 5 a client-side-script-program 9 is run which has a broad variety of functionality also explained in the following later on. Further protocol layers within the structure of the Web browser 5 of the client computer 3 are the layers of the WebSocket 10c ("c" for "client") and the HTTP/HTTPS protocol 11c.

The client-side-script-program 9 uses the Special Remote Desktop Protocol 12c, which separates the different data type channels within the client-side-script-program, namely the GDI command channel 13c, the bitmaps channel 14c and the I/O channel 15c. For the processing of GDI commands and bitmaps provided over the channels 13c and 14c the Canvas context updates function 16 is implemented in the client-side-script-program 9. Further on according data for controlling input and output channels like a mouse, keyboard, printer or the like, on the client computer 3 provided via the I/O channel 15c are handled by a Canvas element function 17.

The gateway program 4 running on the server computer 2 has the following basic functionalities which are partly "mirror images" of the according functionalities of the Web browser 5 of the client computer 3. So the gateway program 4 is also based on the special remote desktop protocol 12s ("s" for "server") with the underlying protocol layers of the WebSocket 10s and HTTP/HTTPS protocol 11s.

As graphics data and drawing commands sent by the server computer 2, which is as a rule a remote desktop server, are often encrypted and compressed, such a data stream cannot be optimized regarding a minimum of needed network bandwidth and processing power. Therefore in the gateway program 4 provides for a decryption/decompression function 18.

In a further processing step as concerns the data provided by the Remote Desktop server computer 2 this data stream is filtered and split into several channels by a splitter/filter function 19. These channels are a GDI commands channel 13s, a bitmap channel 14s and an I/O channel 15s which are again "mirror images" of channels 13c, 14c and 15c of the client computer 3. The data of these different channels can be optimized according to the related characteristics.

The Special Remote Desktop Protocol 12s provides transport channels to send the mentioned single data stream channels to the Web browser 5. For this purpose at least data transport for vector graphics and bitmaps is supported. Optionally in it may additionally support other data channels, namely the mentioned input output channels.

Another functionality of the Special Remote Desktop Protocol 12s is providing a flow control related to the protocol layer which ensures that the Web browser 5 does not suffer of too much data receive in a short time. A further functionality is providing a transport of the already mentioned compressed data streams, which can be done separately and optimized for every single data channel.

On the side of the client computer 3 the special remote desktop protocol 12c layer receives the data streams and separates the different data channels 12c, 14c and 15c according to their properties, namely GDI commands, bitmaps and the other I/O channel data. If the received data are compressed they are decompressed.

Graphics data are rendered out of the GDI commands, raster operations may be performed. The format, in which the great kickstart is passed to the Canvas elements function 17 depends on the properties supported by the Web browser 5 APIs.

A simple example is the use of the API lineTo() to draw a line. In MSDN (Microsoft Developer Network) there is defined:
BOOL LineTo (
   _In_ HDC hdc,
   _In_ int nXEnd,
   _In_ int nYEnd);
as a GDI programing interface for Windows programs.

For X11 used for Unix systems like Linux, the API for drawing a single line has the name XDrawLine(). The definitions can be found by the command "man XDrawLine", or in the header file Xlib.h as:
int XDrawLine(Display *display, Drawable d, GC gc, int x1, int y1, int x2, int y2);

For the Microsoft RDP protocol, lineTo is described in the document [MS-RDPEGDI]:
2.2.2.2.1.1.2.11 LineTo (LINETO_ORDER)
with the exact sequence of bytes which are sent over the RDP/TCP connection.

When in a Unix system the Xlib API XDrawLine() is called, this generates a command PolySegment (to be sent over the network) which is explained in the document
http://www.x.org/archive/X11R7.5/doc/x11proto/proto.pdf
as:
PolySegment
   1 66 opcode
   1 unused
   2 3+2n request length
   4 DRAWABLE drawable
   4 GCONTEXT gc
   8n LISTofSEGMENT segments
SEGMENT
   2 INT16 x1
   2 INT16 y1
   2 INT16 x2
   2 INT16 y2

As an example,
XDrawLine( adsl_display, dsl_window, dsl_gcontext, 10, 390, 390, 10);
sends the following byte/octet stream over the network:
42 00 05 00 01 00 a0 04 02 00 a0 04 0a 00 86 01 86 01 0a 00
   where:
   0x42 - Opcode 66 - Polysegment
   0x00 - unused
   0x0005 - request lenght (each 4 bytes)
   0x04a00001 - drawable reference/id
   0x04a00002 - graphic context reference/id
   0x000a - x1 coordinate
   0x0186 - y1 coordinate
   0x0186 - x2 coordinate
   Ox000a - y2 coordinate

This example is little endian, big endian would look slightly different.

In HTML5/Canvas, lineTo() adds a new point and creates a line from that point to the last specified point in the Canvas.

Parameter Values are
X: The x-coordinate of where to create the line to.
Y: The y-coordinate of where to create the line to.

In OpenGL / WebGL a lineTo GDI-command can be executed in the GPU with the following program code:
glBegin(GL_LINES);
glVertex2i(x1, y1);
glVertex2i(x2, y2);
glEnd( );

Bitmaps, which are a collection of pixel data, may be sent from the Web server to the browser over the WebSocket 10s, 10c in compressed form.

The compressed bitmaps are then expanded by the client-side-script-program 9. This decompression may be done in software only, or with the help of hardware like the GPU 7.

In the client-side-script-program 9 running in the Web browser 5, the content of a display unit 8, e.g. a screen content, is generated by using the GDI-commands which may also manipulate bitmaps.

The client-side-script-program 9 running in the Web browser 5 also renders the drawing instructions.

GDI-commands or Primitives may contain ROP-codes. ROP means "raster operations". Such a ROP-code, for example, may be the operation XOR (bitwise exclusive OR). This XOR means, the resulting bits generated from the GDI-commands or Primitives are XOR calculated with the old content of the destination buffer. The destination buffer could contain the displayed screen data, but it could also contain an intermediate bitmap. The destination buffer is managed by the client-side-script-program 9, running in the Web browser 5.

The HTML5 Canvas 2D API at the time of the invention does not support any ROP commands. So the client-side-script-program 9 applies the ROP-codes to the destination buffers, containing the pixel data to be displayed. Applying the ROP-codes in the Web browser 5, used as GUI client, can also be done with the help of the GPU 7. Mostly OpenGL/WebGL is used for these operations.

On the server computer 2 side, a certain remote desktop protocol is used, including certain operations. On the client computer 3 side, in the Web browser 5, the APIs available for the client-side-script-program 9, provided through HTML5, the Canvas 2D or Canvas WebGL, may have implemented another set of operations. If necessary, the client-side-script-program 9 running in the Web browser 5 does the mapping between the server computer 2 side display data and the client computer 3 side display data through emulation. This emulation can also use hardware acceleration, provided through the GPU 7, for example using the WebGL API.

Another way to solve the differences between possible implementations of 2D on the server computer 2 side and the client computer 3 side can be to disable sending certain commands by the server or manipulations on the server side.

Over the WebSocket 10s, 10c connection, the client-side-script-program 9 may receive OpenGL or DirectX commands directly. Then with these OpenGL or DirectX commands the WebGL APIs are called. Calling the WebGL API from OpenGL or DirectX commands may require a certain wrapper.

When Canvas is used in the Web browser, OpenGL or DirectX commands could also be emulated in software, which means by the client-side-script-program 9.

Some aspects of the invention may be summarized as follows:

In a remote desktop scenario, an HTML5 capable Web browser can connect to a server application and efficiently display the GUI data created by that server application. The graphics data can be sent very effectively with low bandwidth needs and low latency over a public network, when using Primitives and OpenGL commands and compressed or uncompressed bitmaps. Through communicating over a HTTP or Websocket connection of that modern HTML5 capable Web browser, a downloaded script program, like JavaScript, can run in this Web browser to interpret those Primitives and OpenGL commands. It can render the GUI image, sent by the server or an intermediate gateway, and locally create Canvas elements to draw the graphics efficiently onto the Web browsers display area. The implementation specific functionality may be maintained by an intermediate gateway.

## Claims

1. A client-server-communication system comprising
- a public network (1), especially the Internet,
- a server computer (2)
= running at least one server application which provides a graphical user interface,
= wherein the server application creates basic GUI data to be processed by a graphics processing unit (7) for controlling said graphical user interface, which basic GUI data at least include a set of geometric basic primitives, and
- a client computer (3)
= including a graphics processing unit (7),
= connectable to the server computer (2) via the public network (1), and
= running a browser program (5) which is HTML5 capable,
= in which browser program (5) a client-side-script-program (9) including a WebSocket protocol (10) is running, which receives and interprets the basic GUI data and from these basic GUI data renders drawing instructions as graphics content for being processed by the graphics processing unit (7) of the client computer (3).

2. A client-server-communication system according to claim 1, wherein the graphics content is passed to the browser program (5) with displaying server application data in a display area of the browser program (5).

3. A client-server-communication system according to claim 1, wherein the basic GUI data are at least one of Primitives, OpenGL/GDI and Di-rectX commands which if necessary are emulated by the client-side-script-program (9).

4. A client-server-communication system according to claim 1, wherein I/O channel (15) data are handled by the client-side-script-program (9).

5. A client-server-communication system according to claim 1, wherein the client-side-script-program (9) handles the data transfer including the basic GUI data (13) or I/O channel (15) data over the WebSocket protocol (10) in a compressed form, and in particular over a Special Remote Desktop Protocol (12).

6. A client-server-communication system according to claim 1, wherein the client-side-script-program (9) further on provides for one or more of following functionalities:
- handling bitmaps data (14), especially compressed bitmaps data (14),
- applying raster operations onto the basic GUI data (13),
- obtaining drawing contexts and creating Canvas or WebGL elements (17) and updating same.

7. A client-server-communication system according to claim 1, comprising a gateway program (4) running on the server computer (2) or on a separate computer.

8. A client-server-communication system according to claim 7, wherein the gateway program (4) receives at least basic GUI data from the server computer (2).

9. A client-server-communication system according to claim 7, wherein the gateway program (4) provides for a decryption and decompression functionality (18) of data received from the server computer (2).

10. A client-server-communication system according to claim 7, wherein the gateway program (4) provides a splitter and filter operation functionality (19) selecting between different types of data stream channels, like basic GUI data (13), bitmaps (14) or I/O data (15) channels.

11. A client-server-communication system according to claim 7, wherein the gateway program (4) performs a Special Remote Desktop Protocol (12s).

12. A client-server-communication system according to claim 10 and 11, wherein the Special Remote Desktop Protocol (12s) is designed to transport the data streams of separated channels (13s, 14s, 15s) of GUI data, bitmaps or I/O data to the client computer (3) over a WebSocket protocol (10s, 10c and a HTTP/HTTPS protocol (11s, 11c) over the public network (1).

13. A client-server-communication system according to claim 11, wherein the Special Remote Desktop Protocol (12s, 12c) is providing a flow control related to that protocol layer.
